# EUROPEAN PATENT APPLICATION

(11) **EP 3 048 833 A1**
(43) Date of publication of application: **27.07.2016**
(21) Application number: 14868562.1
(22) Date of filing: 02.12.2014
(51) Int. Cl.: H04W 16/18, H04W 84/18

(54) **COMMUNICATION ALLOWABILITY RANGE OUTPUT SYSTEM, COMMUNICATION ALLOWABILITY RANGE OUTPUT DEVICE, METHOD, AND PROGRAM**

(30) Priority: 04.12.2013 JP 2013251103
(71) Applicant: NEC Corporation, Tokyo 108-8001 (JP)
(72) Inventor: HAMADA, Tatsushi, Tokyo 108-8001 (JP); SATOU, Tsuyoshi, Tokyo 108-8001 (JP)
(74) Representative: Betten & Resch
(86) International application number: PCT/JP2014/006006
(87) International publication number: WO 2015/083368

(57) **Abstract**

There is provided a communication allowability range output system capable of specifying a range in which communication is not available in a network. A communication allowability range output device 72 outputs information indicating a communication allowability range of a network formed by a plurality of wireless communication devices 71 based on position information of the wireless communication devices 71 and information on whether the wireless communication devices 71 are operating.

## Description

### Technical Field

The present invention relates to a communication allowability range output system for specifying a range in which communication is not available in a network, a communication allowability range output device, a communication allowability range output method, and a communication allowability range output program.

### Background Art

For example, Patent Literature 1 describes therein an exemplary node forming an ad-hoc network. Patent Literature 1 describes a complex device in which a power supply device for supplying power to a vehicle-mounted battery on an electric vehicle is provided with a wireless base station. The complex device described in Patent Literature 1 includes a commercial power supply for supplying power to the power supply device and the wireless base station during normal time, and switch means for switching the power supply from the commercial power supply to the vehicle-mounted battery on the electric vehicle in case of emergency when the commercial power supply is not available. The complex device operates with the vehicle-mounted battery as the power supply in case of emergency. The wireless base station in the complex device makes communication with a server. When a disaster or the like occurs and the wireless base station in the complex device cannot access the server, the wireless base station in the complex device forms an ad-hoc network with other neighboring complex device. If the wireless base station in other complex device can access the server, the wireless base station incapable of accessing the server forms an ad-hoc network, and then can access the server.

Further, Patent Literature 2 describes a disaster recovery progress management system in which information on disaster situations of accidents occurring in a wide range and their recovery progresses can be grasped by both workers and managers. The disaster recovery progress management system described in Patent Literature 2 includes a mobile terminal and a server. The worker holds the mobile terminal. Then, the mobile terminal acquires position information associated with a disaster occurring area, and transmits its position information together with the disaster situation or recovery progress in the disaster occurring area to the server. The server manages the recovery progress, the disaster range, and the disaster contents based on the position information and the recovery progress received from the mobile terminal. Patent Literature 2 lists position information of the mobile terminal as exemplary position information associated with a disaster occurring area. Other exemplary position information associated with a disaster occurring area includes the address of a disaster occurring area, the number of a telephone pole, and the management number of an electricity facility.

Non-Patent Literature 1 describes an exemplary portable access point used in case of disaster.

### Citation List

### Patent Literature

PTL 1: Japanese Patent Application Laid-Open No. 2011-166972 (Paragraphs 0010 to 0017, 0023 to 0025, 0036, 0056, 0071, and others)
PTL 2: Japanese Patent Application Laid-Open No. 2007-25911 (Paragraphs 0007, 0008, 0011, 0028, 0030 to 0040, and others)

### Non Patent Literature

NPL 1: "NEC and Tohoku University develop technologies for creating temporary networks with Wi-Fi spots in disaster areas" [online] March 18, 2013, NEC Corporation, Cyberscience Center Tohoku University, [searched on June 24, 2013], Internet <URL: http://jpn.nec.com/press/201303/20130318_01.html>

### Summary of Invention

### Technical Problem

A communication carrier may limit communication in a public communication network in case of disaster. In this case, even if a local government or the like tries to transmit information on evacuation places to local residents, the communication is difficult to make. Thus, it is considered that information is transmitted via an ad-hoc network not the public communication network provided by the communication carrier in case of disaster.

In case of disaster, however, some devices cannot be used due to the disaster among the devices which are expected to be the nodes in an ad-hoc network. Then, there is caused a range in which communication is not available in the ad-hoc network. If portable nodes are arranged in the range in place of the unavailable devices, information can be transmitted to the local residents within the range. Therefore, it is necessary to specify a range in which communication is not available in the ad-hoc network.

With the system described in Patent Literature 2, the worker having the mobile terminal has to actually visit the disaster site. Further, with the system described in Patent Literature 2, the mobile terminal is configured to transmit its position information together with the disaster situation or recovery progress of the disaster occurring area to the server, and thus an unavailable node in the ad-hoc network may not be specified.

It is therefore an object of the present invention to provide a communication allowability range output system capable of specifying a range in which communication is not available in a network, a communication allowability range output device, a communication allowability range output method, and a communication allowability range output program.

### Solution to Problem

A communication allowability range output system according to the present invention includes: a plurality of wireless communication devices; and a communication allowability range output device for outputting information indicating a communication allowability range of a network formed by the wireless communication devices based on position information of the wireless communication devices and information on whether the wireless communication devices are operating.

A communication allowability range output device according to the present invention includes: storage means for storing position information of a plurality of wireless communication devices; determination means for determining whether the wireless communication devices are operating; and output means for outputting information indicating a communication allowability range of a network formed by the wireless communication devices based on a result determined by the determination means.

A communication allowability range output method according to the present invention includes the steps of: storing position information of a plurality of wireless communication devices; determining whether the wireless communication devices are operating; and outputting information indicating a communication allowability range of a network formed by the wireless communication devices based on a determination result as to whether the wireless communication devices are operating.

A communication allowability range output program according to the present invention is mounted on a computer including storage means for storing position information of a plurality of wireless communication devices, the program causing a computer to perform: determination processing of determining whether the wireless communication devices are operating; and information output processing of outputting information indicating a communication allowability range of a network formed by the wireless communication devices based on a result determined in the determination processing.

### Advantageous Effects of Invention

According to the present invention, it is possible to specify a range in which communication is not available in a network.

### Brief Description of Drawings

[Fig. 1] It depicts a block diagram illustrating an exemplary communication allowability range output system according to the present invention.
[Fig. 2] It depicts an explanatory diagram illustrating exemplary neighboring node information.
[Fig. 3] It depicts a block diagram illustrating an exemplary structure of a communication allowability range output device.
[Fig. 4] It depicts an explanatory diagram illustrating an exemplary secondary battery database.
[Fig. 5] It depicts a block diagram illustrating an exemplary structure of a secondary battery.
[Fig. 6] It depicts a block diagram illustrating an exemplary structure of a resident terminal.
[Fig. 7] It depicts a flowchart illustrating an exemplary processing progress of the communication allowability range output device.
[Fig. 8] It depicts a schematic diagram illustrating exemplary display in step S6.
[Fig. 9] It depicts a schematic diagram illustrating other exemplary display in step S6.
[Fig. 10] It depicts a flowchart illustrating exemplary processing progress of a secondary battery receiving a vital monitoring signal.
[Fig. 11] It depicts a flowchart illustrating exemplary processing progress of a secondary battery receiving a response signal.
[Fig. 12] It depicts a schematic diagram illustrating an exemplary disaster-related information transmission route.
[Fig. 13] It depicts a block diagram illustrating main components in the communication allowability range output system according to the present invention.
[Fig. 14] It depicts a block diagram illustrating main components in the communication allowability range output device according to the present invention.

### Description of Embodiments

An exemplary embodiment of the present invention will be described below with reference to the drawings.

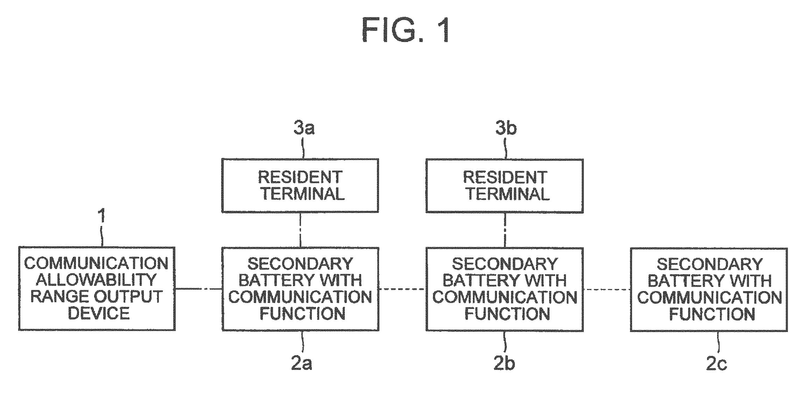

Fig. 1 is a block diagram illustrating an exemplary communication allowability range output system according to the present invention. The communication allowability range output system according to the present invention includes a plurality of secondary batteries with communication function 2a, 2b, 2c, and a communication allowability range output device 1. Fig. 1 illustrates three secondary batteries with communication function 2a, 2b, and 2c, but the number of secondary batteries with communication function is not limited.

Each secondary battery with communication function 2a, 2b, 2c is a secondary battery having a wireless communication function. The respective secondary batteries with communication function 2a, 2b, and 2c (which will be simply denoted as secondary batteries 2a, 2b, and 2c below) are dispersed in a plurality of facilities (such as community halls) in a local government. The secondary batteries 2a, 2b, and 2c may be installed in places other than the facilities in the local govermnent. The secondary batteries 2a, 2b, and 2c are charged as needed during normal time, and supply power to other electric equipment (not illustrated) provided in the installation places of the secondary batteries 2a, 2b, and 2c. When making communication, the secondary batteries 2a, 2b, and 2c use the power charged therein.

In the following description, the secondary batteries 2a, 2b, and 2c illustrated in Fig. 1 are denoted as "secondary batteries 2" without any particularly discrimination.

Each secondary battery 2 forms an ad-hoc network by use of the wireless communication function. That is, each secondary battery 2 corresponds to a node in the ad-hoc network. Each secondary battery 2 may form the ad-hoc network according to an existing standard.

Each secondary battery 2 is allocated with ID for identifying the secondary battery (which will be denoted as secondary battery ID). The description will be made assuming that the secondary battery IDs of the secondary batteries 2a. 2b, and 2c are "A," "B," and "C," respectively.

According to the present exemplary embodiment, the description will be made assuming that the secondary batteries 2 make communication in the 920 MHz bandwidth, but the frequency bandwidth used for communication among the secondary batteries 2 may not be at 920 MHz. General users can use Wi-Fi (Wireless Fidelity, trademark) communication or 3G (3rd Generation) communication. Therefore, if Wi-Fi communication or 3G communication is employed for the communication among the secondary batteries 2, the secondary batteries 2 cannot make communication due to excessive accesses in case of disaster. On the other hand, general users cannot make communication in the 920 MHz bandwidth. Therefore, the secondary batteries 2 make communication in the 920 MHz bandwidth, causing an effect that the communication among the secondary batteries 2 can be easily secured.

The communication allowability range output device 1 determines whether an individual secondary battery 2a, 2b, 2c is inoperative as a node in the ad-hoc network, and displays information (area information) indicating areas in which communication is not available in the ad-hoc network based on the determination result. The communication allowability range output device 1 performs the operation after a disaster occurred. The communication allowability range output device 1 may be realized by a stationary terminal device. In this case, however, if an installation place of the communication allowability range output device 1 is damaged, the communication allowability range output device 1 cannot perform the above operation. Therefore, it is preferable that the communication allowability range output device 1 is a portable terminal device. Further, the communication allowability range output device 1 may include a client device and a server device. Then, there may be configured such that the client device displays information and the server device performs other processing in the communication allowability range output device 1. The description will be made below assuming that the communication allowability range output device 1 is a portable terminal device.

The communication allowability range output device 1 is managed by an employee (which will be denoted as manager below) of a local government such as city, town or village, for example. The communication allowability range output device 1 transmits information on disaster (denoted as disaster-related information) to the terminal devices of the local residents (which will be denoted as resident terminals) present within the communication ranges of the secondary batteries 2 in response to an operation of the manager after the disaster occurred. The communication allowability range output device 1 transmits the disaster-related information in the ad-hoc network formed by the secondary batteries 2.

Fig. 1 illustrates a case in which a resident terminal 3a is present within a communication range of the secondary battery 2a and a resident terminal 3b is present within a communication range of the secondary battery 2b, but the number of resident terminals is not limited. Further, each resident terminal 3a, 3b may be a portable terminal device carried by a resident. Alternatively, each resident terminal 3a, 3b may be a stationary terminal device. The resident terminals 3a and 3b illustrated in Fig. 1 are denoted as "resident terminals 3" without any particular discrimination.

Communication between the communication allowability range output device 1 and the secondary batteries 2 or communication between the secondary batteries 2 and the resident terminals 3 is realized via Wi-Fi communication or 3G communication without the use of the 920 MHz bandwidth. According to the present exemplary embodiment, the description will be made assuming that communication between the communication allowability range output device 1 and the secondary batteries 2 or communication between the secondary batteries 2 and the resident terminals 3 is made via Wi-Fi communication, but any communication (such as 3G communication) other than Wi-Fi communication may be employed.

Herein, if the coverage areas of communication of the secondary batteries 2 are too wide, the disaster-related information can be transmitted even to terminal devices present in a manager-unintended area. In this case, the manager needs to previously assume a wide area in which the disaster-related information is to be transmitted. Therefore, communication between the communication allowability range output device 1 and the secondary batteries 2 or communication between the secondary batteries 2 and the resident terminals 3 is preferably made via Wi-Fi communication. Communication between the communication allowability range output device 1 and the secondary batteries 2 or communication between the secondary batteries 2 and the resident terminals 3 is made via Wi-Fi communication, thereby realizing power saving.

There will be described below an exemplary method for determining where the secondary batteries 2a, 2b, and 2c forming the ad-hoc network transfer information in the ad-hoc network. The description will be made herein in terms of the secondary battery 2a.

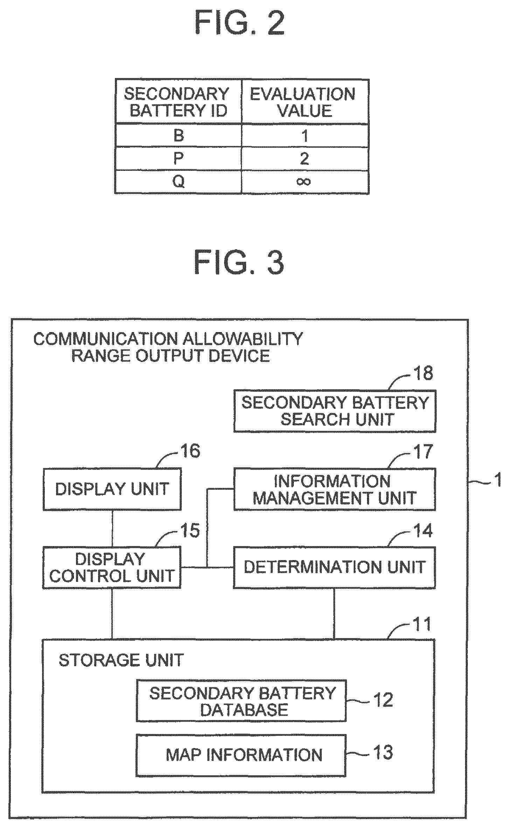

The secondary battery 2a searches other communicably-neighboring secondary battery. The secondary battery 2a then generates neighboring node information indicating other communicably-neighboring secondary battery. Fig. 2 is an explanatory diagram illustrating exemplary neighboring node information. The secondary battery 2a creates, as the neighboring node information, information in which the secondary battery ID of each searched secondary battery is associated with an evaluation value indicating a degree at which each secondary battery is appropriate as the communicably-neighboring secondary battery. As the degree at which the communicably-neighboring secondary battery is appropriate is higher, the secondary battery 2a defines a lower evaluation value. The evaluation value of an inappropriate secondary battery as the communicably-neighboring secondary battery is defined at ∞. The secondary battery 2a may define an evaluation value based on communication quality or the like during the searching.

Herein, each secondary battery is represented by its secondary battery ID, such as "secondary battery B." The secondary battery B is the secondary battery 2b illustrated in Fig. 1. The secondary batteries P and Q are not illustrated in Fig. 1.

The example illustrated in Fig. 2 indicates that the secondary batteries B and P are communicably neighboring to the secondary battery 2a. It further indicates that the secondary battery B is more appropriate as the communicably-neighboring secondary battery than the secondary battery P. Further, the example illustrated in Fig. 2 indicates a case in which the secondary battery 2a searches the secondary battery Q in addition to the secondary batteries B and P but the secondary battery Q is determined as inappropriate as the communicably-neighboring secondary battery due to communication quality or the like during the searching and an evaluation value of the secondary battery Q is defined at ∞. The secondary battery Q with an evaluation value of ∞ or a secondary battery not described in the neighboring node information is not a next node to the secondary battery 2a.

The secondary battery 2a transmits the generated neighboring node information (see Fig. 2) to the appropriate secondary batteries B and P as the communicably-neighboring secondary batteries. The secondary batteries B and P receiving the neighboring node information from the secondary battery 2a store the neighboring node information and transfer the neighboring node information to communicably-neighboring secondary batteries relative to the secondary batteries B and P. In this way, when receiving the neighboring node information generated by other secondary battery, each secondary battery stores the neighboring node information and transfers the neighboring node information to other secondary battery. Consequently, the neighboring node information generated by the secondary battery 2a is transferred to each secondary battery forming the ad-hoc network to be stored in each secondary battery.

Similarly, each secondary battery other than the secondary battery 2a generates neighboring node information and transmits the neighboring node information to a communicably-neighboring secondary battery. The neighboring node information is then transmitted to each secondary battery forming the ad-hoc network to be stored in each secondary battery.

Thus, an individual secondary battery forming the ad-hoc network stores neighboring node information generated in each secondary battery. Therefore, if a secondary battery as a data destination is designated, an individual secondary battery determines whether a route from itself to the destination secondary battery is present based on the neighboring node information generated in each secondary battery, and when the route to the destination secondary battery is present, can specify the route. When the route to the destination secondary battery is specified, an individual secondary battery then transmits the data to a secondary battery corresponding to its next node on the route. Therefore, when receiving the destination-designated data, each secondary battery forming the ad-hoc network can sequentially transfer the data to the destination assuming that the route to the destination can be specified.

An exemplary structure of the communication allowability range output device 1 will be described below. Fig. 3 is a block diagram illustrating an exemplary structure of the communication allowability range output device 1. The communication allowability range output device 1 includes a storage unit 11, a determination unit 14, a display control unit 15, a display unit 16, an information management unit 17, and a secondary battery search unit 18.

The storage unit 11 is directed for storing a secondary battery database 12 and map information 13.

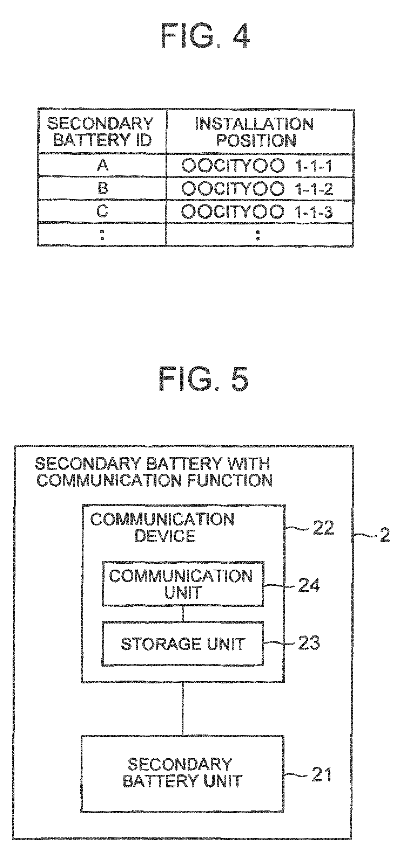

Fig. 4 is an explanatory diagram illustrating the secondary battery database 12 by way of example. The secondary battery database 12 is information in which a secondary battery ID and a secondary battery installation position (position information) are associated per secondary battery managed by the manager as illustrated in Fig. 4.

The map information 13 indicates a map of the entire range of a local government. The secondary batteries 2a, 2b, and 2c are installed within the range of the local government.

The communication allowability range output device 1 may previously download the secondary battery database 12 and the map information 13 from a server (not illustrated) of the local government for providing the secondary battery database 12 and the map information 13 to be stored in the storage unit 11. Alternatively, the manager may directly input the secondary battery database 12 and the map information 13 into the communication allowability range output device 1 to be stored in the storage unit 11.

The determination unit 14 determines whether an individual secondary battery 2a, 2b, 2c is inoperative as a node in the ad-hoc network.

For example, the determination unit 14 sequentially selects a secondary battery 2, and transmits a vital monitoring signal to a neighboring secondary battery 2 with the selected secondary battery 2 as a destination. When the selected secondary battery 2 does not respond to the vital monitoring signal, the determination unit 14 determines that the secondary battery 2 is inoperative as a node in the ad-hoc network. On the other hand, when the selected secondary battery 2 responds to the vital monitoring signal, the determination unit 14 determines that the secondary battery 2 is operating as a node in the ad-hoc network.

The display unit 16 is a liquid crystal display or the like.

The display control unit 15 displays, on the display unit 16, information on areas in which communication is not available in the ad-hoc network based on a determination result as to whether an individual secondary battery 2a, 2b, 2c is inoperative as a node in the ad-hoc network.

The information management unit 17 transmits the disaster-related information to the resident terminals 3 in the ad-hoc network. According to the exemplary embodiment, the resident terminals 3 may transmit safety information to the communication allowability range output device 1 as a transmission source of the disaster-related information after receiving the disaster-related information. In this case, the information management unit 17 receives the safety information transmitted from the resident terminals 3. The safety information indicates whether a local resident as an owner of the resident terminal 3 is safe.

The display control unit 15 may display, on the display unit 16, information on the safe local residents and the unsafe local residents based on the safety information received by the information management unit 17.

The secondary battery search unit 18 searches a secondary battery 2 neighboring to the communication allowability range output device 1 and establishes Wi-Fi communication with the secondary battery 2. At this time, the secondary battery search unit 18 transmits the address of the communication allowability range output device 1 to the secondary battery 2. Consequently, when receiving the information destined for the communication allowability range output device 1, the secondary battery 2 can transmit the information to the communication allowability range output device 1 via Wi-Fi communication.

The determination unit 14, the display control unit 15, the information management unit 17, and the secondary battery search unit 18 are realized by the CPU (Central Processing Unit) in a computer operating according to a communication allowability range output program, for example. For example, the CPU may read the communication allowability range output program thereby to operate as the determination unit 14, the display control unit 15, and the information management unit 17 according to the program. The communication allowability range output program may be stored in a computer-readable recording medium. Further, the determination unit 14, the display control unit 15, the information management unit 17, and the secondary battery search unit 18 may be realized by separate hardware.

An exemplary structure of the secondary battery 2 will be described below. Fig. 5 is a block diagram illustrating an exemplary structure of the secondary battery 2. The secondary battery 2 includes a secondary battery unit 21 and a communication device 22. The communication device 22 includes a storage unit 23 and a communication unit 24.

The secondary battery unit 21 is charged as needed and supplies power to other electric equipment (not illustrated) provided in the installation place of the secondary battery 2. Further, the secondary battery unit 21 supplies power to the communication device 22 when the communication device 22 consumes power. The secondary battery unit 21 is charged during the night by power supplied by an electric power company, for example. The secondary battery unit 21 may be charged in other manner.

The storage unit 23 is a storage device for storing the neighboring node information generated by each secondary battery 2.

The communication unit 24 forms an ad-hoc network with other secondary batteries 2. The communication unit 24 then generates neighboring node information, and transmits the neighboring node information to communicably-neighboring secondary batteries. Further, the communication unit 24 relays the neighboring node information generated by other secondary batteries 2. The communication unit 24 stores its generated neighboring node information, or the neighboring node information generated by other secondary batteries 2 in the storage unit 23.

When receiving a vital monitoring signal from the communication allowability range output device 1 as a transmission source, the communication unit 24 determines whether a route from its node (or the secondary battery 2 including the communication unit 24) to the destination secondary battery 2 of the vital monitoring signal is present based on the neighboring node information generated in each secondary battery. When the route is not present, the communication unit 24 may discard the vital monitoring signal. When the route is present, the communication unit 24 transmits the vital monitoring signal to the secondary battery 2 corresponding to its next node on the route.

When receiving the vital monitoring signal destined for the node (or the secondary battery 2 including the communication unit 24), the communication unit 24 transmits a response signal for the vital monitoring signal. When receiving the response signal from other secondary battery 2, the communication unit 24 transmits response information to the secondary battery 2 corresponding to its next node on the route to the destination similarly when receiving the vital monitoring signal.

The communication unit 24 is realized by the CPU in a computer operating according to a communication program, for example.

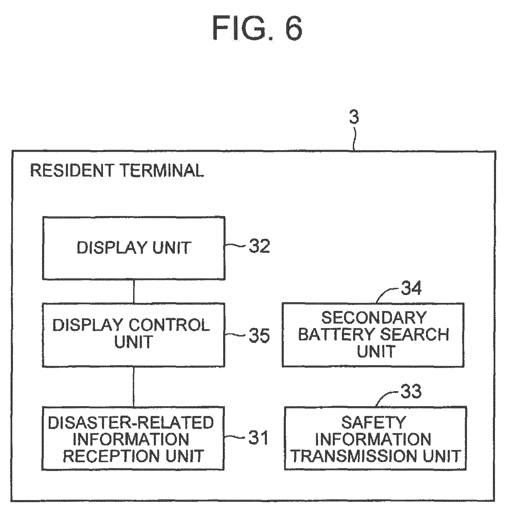

An exemplary structure of the resident terminal 3 will be described below. Fig. 6 is a block diagram illustrating an exemplary structure of the resident terminal 3. The resident terminal 3 includes a disaster-related information reception unit 31, a display control unit 35, a display unit 32, a safety information transmission unit 33, and a secondary battery search unit 34.

The secondary battery search unit 34 operates similarly as the secondary battery search unit 18 (see Fig. 3) in the communication allowability range output device 1. That is, the secondary battery search unit 34 searches a secondary battery 2 neighboring to the resident terminal 3, and establishes Wi-Fi communication with the secondary battery 2. At this time, the secondary battery search unit 34 transmits the address of the resident terminal 3 to the secondary battery 2. Consequently, the secondary battery 2 can transmit information to the resident terminal 3.

The display unit 32 is a liquid crystal display or the like.

The disaster-related information reception unit 31 receives the disaster-related information transmitted from the communication allowability range output device 1 from a neighboring secondary battery 2.

The display control unit 35 displays the disaster-related information received by the disaster-related information reception unit 31 on the display unit 32,

The safety information transmission unit 33 transmits safety information to the communication allowability range output device 1 as a transmission source of the disaster-related information in response to an operation of the user of the resident terminal 3.

The disaster-related information reception unit 31, the display control unit 35, the safety information transmission unit 33, and the secondary battery search unit 34 are realized by the CPU in a computer operating according to a resident terminal program, for example. For example, the CPU previously downloads the resident terminal program from the server of the local government (not illustrated) to be stored in a program storage device. The CPU may then read the program thereby to operate as the disaster-related information reception unit 31, the display control unit 35, the safety information transmission unit 33, and the secondary battery search unit 34 according to the program.

Processing progress of the present invention will be described below. Each secondary battery 2 is assumed to form an ad-hoc network. An individual secondary battery 2 is assumed to store neighboring node information generated by each secondary battery 2 forming the ad-hoc network in the storage unit 23 (see Fig. 5). A secondary battery 2 inoperative as a node in the ad-hoc network due to disaster is assumed to be excluded from the nodes in the ad-hoc network.

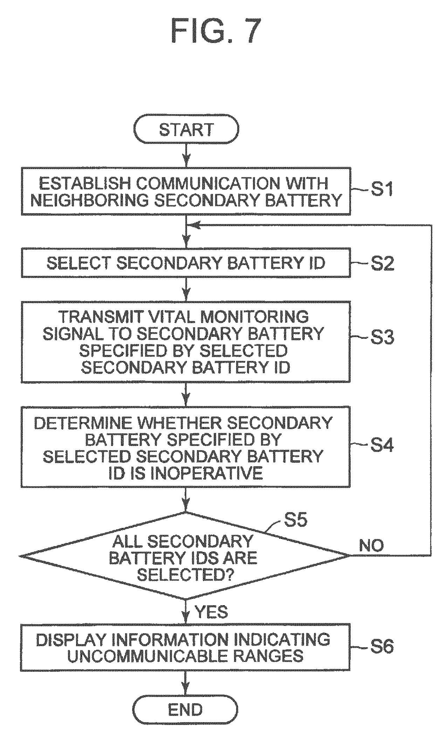

Fig. 7 is a flowchart illustrating exemplary processing progress of the communication allowability range output device 1. At first, the secondary battery search unit 18 searches a secondary battery 2 neighboring to the communication allowability range output device 1. The secondary battery search unit 18 then transmits the address of the communication allowability range output device 1 to the searched secondary battery 2, and establishes Wi-Fi communication with the secondary battery 2 (step S1). The example illustrated in Fig. 1 indicates a state in which Wi-Fi communication is established between the communication allowability range output device 1 and the secondary battery 2a as a result of step S 1.

After Wi-Fi communication is established, the determination unit 14 selects one unselected secondary battery ID from the secondary battery database 12 with reference to the secondary battery database 12 (see Fig. 4) (step S2).

The determination unit 14 then transmits a vital monitoring signal destined for the secondary battery 2 specified by the selected secondary battery ID to the secondary battery 2 (the secondary battery 2a in the example illustrated in Fig. 1) establishing Wi-Fi communication in step S1 (step S3).

When the secondary battery 2 corresponding to the destination of the vital monitoring signal is operating as a node in the ad-hoc network, the secondary batteries 2 forming the ad-hoc network sequentially transfer the vital monitoring signal transmitted from the determination unit 14. When receiving the vital monitoring signal, the secondary battery 2 corresponding to the destination of the vital monitoring signal transmits a response signal for the vital monitoring signal to the communication allowability range output device 1. The secondary batteries 2 forming the ad-hoc network sequentially transfer the response signal. Consequently, the determination unit 14 receives the response signal.

On the other hand, when the secondary battery 2 corresponding to the destination of the vital monitoring signal is inoperative as a node in the ad-hoc network, the secondary battery 2 is excluded from the ad-hoc network. Consequently, a route to the secondary battery 2 cannot be specified even with reference to the neighboring node information of each secondary battery 2. Therefore, the secondary battery 2 receiving the vital monitoring signal from the determination unit 14 discards the vital monitoring signal. Consequently, the determination unit 14 does not receive a response signal.

After step S3, the determination unit 14 determines whether the secondary battery 2 specified by the selected secondary battery ID is inoperative as a node in the ad-hoc network (step S4). When not receiving a response signal within a predetermined period of time after transmitting the vital monitoring signal, the determination unit 14 determines that the secondary battery 2 specified by the selected secondary battery ID is inoperative. Further, when receiving a response signal within a predetermined period of time after transmitting the vital monitoring signal, the determination unit 14 determines that the secondary battery 2 specified by the selected secondary battery ID is operating.

The determination unit 14 then determines whether all the secondary battery IDs in the secondary battery database 12 have been selected in step S2 (step S5). When an unselected secondary battery ID is present (No in step S5), the processing in and subsequent to step S2 are repeatedly performed.

When all the secondary battery IDs have been selected (Yes in step S5), the display control unit 15 displays, on the display unit 16, information indicating areas in which communication is not available in the ad-hoc network based on a determination result in step S4 for each secondary battery 2 (step S6). Specifically, the display control unit 15 displays, on the display unit 16, a map in which the areas in which communication is not available in the ad-hoc network are overlapped on the map information 13.

When input with an instruction of starting a processing by the manager after a disaster occurred, the communication allowability range output device 1 may perform the processing in and subsequent to step S 1.

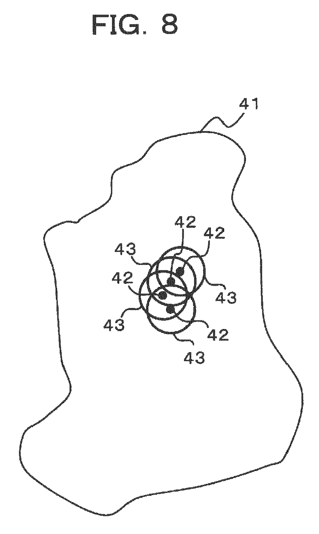

Fig. 8 is a schematic diagram illustrating exemplary display in step S6. A map 41 is indicated by the map information 13 (see Fig. 3) stored in the storage unit 11 in the communication allowability range output device 1. The display control unit 15 may display, on the display unit 16, information (see Fig. 8) in which circles 43 with the installation positions 42 of the secondary batteries 2 inoperative as the nodes in the ad-hoc network as the centers are overlapped on the map 41, for example. The display control unit 15 may specify the installation positions 42 of the secondary batteries 2 with reference to the secondary battery database 12. A radius of the circle 43 is previously defined as a length corresponding to a distance (such as several hundreds of meters) at which communication is assumed to be available in the 920 MHz bandwidth. In the example illustrated in Fig. 8, the circles 43 about the installation positions 42 of the inoperative secondary batteries 2 are represented thereby to discriminately indicate the communicable areas and the uncommunicable areas. Further, in the example illustrated in Fig. 8, the communication allowability range output device 1 directly displays the areas within the circles 43 about the installation positions 42 of the inoperative secondary batteries 2 as the areas in which communication is not available in the ad-hoc network. Moreover, when an uncommunicable area is displayed in the display form illustrated in Fig. 8, it is assumed that the display control unit 15 in the communication allowability range output device 1 determines the areas within the circles 43 about the installation positions 42 of the inoperative secondary batteries 2 as the areas in which communication is not available in the ad-hoc network.

When the communication allowability range output device 1 displays information in the form illustrated in Fig. 8, the manager can determine that the areas within the circles 43 are the areas in which communication is not available in the ad-hoc network.

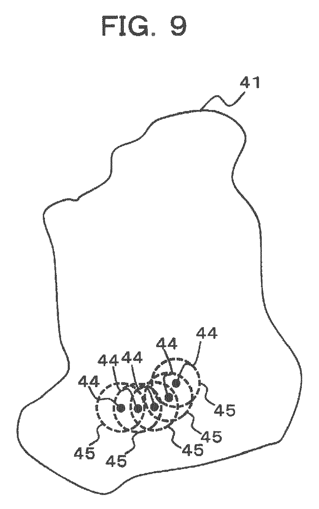

Fig. 9 is a schematic diagram illustrating other exemplary display in step S6. The map 41 is the same as the map 41 illustrated in Fig. 8. The display control unit 15 may display, on the display unit 16, information (see Fig. 9) in which circles 45 with the installation positions 44 of the secondary batteries 2 operating as the nodes in the ad-hoc network as the centers are overlapped on the map 41, for example. A radius of the circle 45 is equal to the radius of the circle 43 illustrated in Fig. 8. In the example illustrated in Fig. 9, the circles 45 about the installation positions 44 of the operating secondary batteries 2 are represented thereby to discriminately indicate the communicable areas and the uncommunicable areas. In the example illustrated in Fig. 9, the communication allowability range output device 1 displays the area outside the circles 45 about the installation positions 44 of the operating secondary batteries 2 as the area in which communication is not available in the ad-hoc network. Further, when an uncommunicable area is displayed in the display form illustrated in Fig. 9, it is assumed that the display control unit 15 in the communication allowability range output device 1 determines that the area not included in any circle 45 is an area in which communication is not available in the ad-hoc network.

When the communication allowability range output device 1 displays the information in the form illustrated in Fig. 9, the manager can determine that the area not included in any circle 45 is an area in which communication is not available in the ad-hoc network.

Further, the display control unit 15 may switch the display form illustrated in Fig. 8 and the display form illustrated in Fig. 9. For example, when the number of inoperative secondary batteries 2 among all the secondary batteries 2 managed by the manager is lower than the number of operating secondary batteries, the areas in which communication is not available in the ad-hoc network may be displayed on the display unit 16 in the display form illustrated in Fig. 8. On the other hand, when the number of inoperative secondary batteries 2 is equal to or higher than the number of operating secondary batteries, the uncommunicable areas may be displayed on the display unit 16 in the display form illustrated in Fig. 9.

The display control unit 15 may display, on the display unit 16, information in which both the circles 43 (see Fig. 8) about the installation positions 42 of the inoperative secondary batteries 2 and the circles 45 (see Fig. 9) about the installation positions 44 of the operating secondary batteries 2 are overlapped on the map 41. In this case, the line type of the circles 43 is different from the line type of the circles 45.

The display control unit 15 may display the uncommunicable areas on the display unit 16 in either display form. The display form illustrated in Fig. 8 is such that the areas in which communication is not available in the ad-hoc network are directly displayed, which is particularly preferable.

The display form in step S6 is not limited to the examples illustrated in Fig. 8 and Fig. 9. For example, the display control unit 15 may display, on the display unit 16, the circles 43 (see Fig. 8) about the installation positions 42 of the inoperative secondary batteries 2 and the installation positions of the operating secondary batteries 2 present therearound together. Further, for example, the display control unit 15 may display, on the display unit 16, the circles 45 (see Fig. 9) about the installation positions 44 of the operating secondary batteries 2 and the installation positions of the inoperative secondary batteries 2 present therearound together.

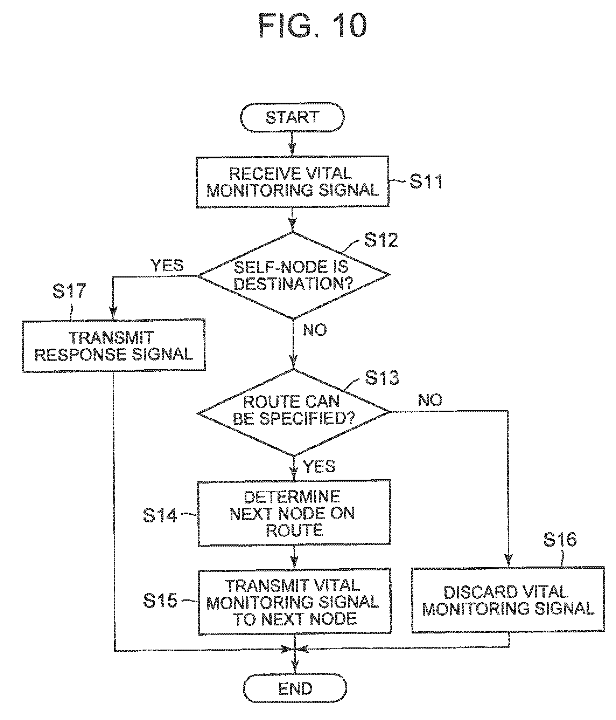

Processing progress of the secondary battery 2 will be described below. Fig. 10 is a flowchart illustrating exemplary processing progress of the secondary battery 2 receiving a vital monitoring signal.

The communication unit 24 in the secondary battery 2 receives a vital monitoring signal from the communication allowability range output device 1 or other secondary battery 2 (step S11). In step S11, when receiving a vital monitoring signal from the communication allowability range output device 1 via Wi-Fi communication, the communication unit 24 adds, to the vital monitoring signal, the information that a secondary battery in the ad-hoc network directly making Wi-Fi communication with the communication allowability range output device 1 as a transmission source of the vital monitoring signal is its node (or the secondary battery 2 including the communication unit 24). For example, when the communication unit 24 in the secondary battery 2a illustrated in Fig. 1 receives a vital monitoring signal from the communication allowability range output device 1 via Wi-Fi communication, the communication unit 24 adds, to the vital monitoring signal, the information that a secondary battery in the ad-hoc network directly making Wi-Fi communication with the communication allowability range output device 1 is the secondary battery 2a. When the communication unit 24 receives a vital monitoring signal from other secondary battery 2, the information is already added thereto. In this case, the communication unit 24 does not add the information in step S11.

After step S11, the communication unit 24 determines whether its node is a destination of the vital monitoring signal (step S12).

When the node is not a destination of the vital monitoring signal (No in step S12), the communication unit 24 determines whether a route from its node to a secondary battery as the destination of the vital monitoring signal can be specified based on the neighboring node information generated in each secondary battery (step S13).

In step S13, when the route from the node to the destination can be specified (Yes in step S13), the communication unit 24 specifies the route. The communication unit 24 then determines a secondary battery 2 as a next node of its node on the route from the node to the destination (step S14). The communication unit 24 then transmits the vital monitoring signal to the secondary battery 2 as a next node of its node (step S15). For example, in the example illustrated in Fig. 1, it is assumed that the communication unit 24 in the secondary battery 2a receives a vital monitoring signal destined for the secondary battery 2c. It is assumed that the communication unit 24 then determines a route of "secondary battery 2a, secondary battery 2b, secondary battery 2c" as a route from the secondary battery 2a to the secondary battery 2c. In this case, the communication unit 24 in the secondary battery 2a transmits a vital monitoring signal to the secondary battery 2b as a next node of the secondary battery 2a. Each secondary battery 2 performs the operation so that the vital monitoring signal is sequentially transferred to the destination secondary battery 2c.

In step S13, when a route from the node to the destination cannot be specified (No in step S13), the communication unit 24 discards the vital monitoring signal received in step S11 (step S16). Consequently, the communication allowability range output device 1 does not receive a response signal from the destination secondary battery 2. The communication allowability range output device 1 then determines that the destination secondary battery 2 is inoperative.

In step S12, when the node is determined as a destination of the vital monitoring signal (Yes in step S12), the communication unit 24 transmits a response signal for the vital monitoring signal to the communication allowability range specification device 1 as a transmission source of the vital monitoring signal (step S17). At this time, the communication unit 24 adds, to the response signal, the information for designating a secondary battery 2 in the ad-hoc network directly making Wi-Fi communication with the communication allowability range output device 1 as a destination of the response signal based on the information added to the vital monitoring signal. For example, in the example illustrated in Fig. 1, it is assumed that the communication allowability range specification device 1 transmits a vital monitoring signal to the secondary battery 2c and the secondary battery 2c receives the vital monitoring signal. The vital monitoring signal is added with the information that a secondary battery in the ad-hoc network directly making Wi-Fi communication with the communication allowability range output device 1 is the secondary battery 2a. Therefore, the communication unit 24 in the secondary battery 2c adds, to the response signal, the information for designating a secondary battery in the ad-hoc network directly making Wi-Fi communication with the communication allowability range output device 1 as the secondary battery 2a.

When transmitting a response signal in step S 17, the communication unit 24 specifies a route from its node to the secondary battery 2 directly making Wi-Fi communication with the communication allowability range output device 1, and transmits a response signal to a next node of its node on the route.

According to the present exemplary embodiment, there has been described the case in which the information on a secondary battery in the ad-hoc network directly making Wi-Fi communication with the communication allowability range output device 1 is added to the vital monitoring signal and the response signal, but the present invention may be realized according to an exemplary embodiment in which the information on a secondary battery in the ad-hoc network directly making Wi-Fi communication with the communication allowability range output device 1 is not added to the vital monitoring signal and the response signal.

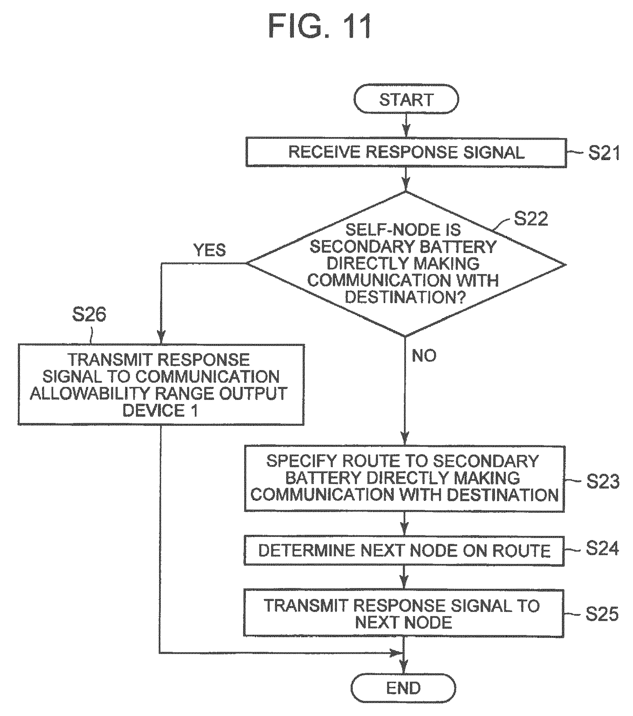

Fig. 11 is a flowchart illustrating exemplary processing progress of the secondary battery 2 receiving a response signal. The communication unit 24 in the secondary battery 2 receives a response signal from other secondary battery 2 (step S21). The communication unit 24 then determines whether its node is a secondary battery 2 in the ad-hoc network directly making Wi-Fi communication with the communication allowability range output device 1 as a destination of the response signal (step S22).

When the node is not a secondary battery 2 directly making Wi-Fi communication with the communication allowability range output device 1 as a destination of the response signal (No in step S22), the communication unit 24 specifies a route from its node to the secondary battery 2 directly making Wi-Fi communication with the communication allowability range output device 1 as a destination of the response signal (step S23), and determines a secondary battery 2 as a next node of its node on the route (step S24). The communication unit 24 then transmits a response signal to the secondary battery 2 as a next node of its node (step S25). Each secondary battery 2 performs the operation so that the response signal is sequentially transferred to the secondary battery 2 directly making Wi-Fi communication with the communication allowability range output device 1.

When the node is a secondary battery 2 directly making Wi-Fi communication with the communication allowability range output device 1 as a destination of the response signal (Yes in step S22), the communication unit 24 transmits the received response signal to the communication allowability range output device 1 via Wi-Fi communication (step S26). For example, when the communication unit 24 in the secondary battery 2a illustrated in Fig. 1 receives the response signal destined for the communication allowability range output device 1, the communication unit 24 transmits the response signal to the communication allowability range output device 1 via Wi-Fi communication.

The operations will be described below when the communication allowability range output device 1 transmits disaster-related information to the resident terminals 3 in the ad-hoc network.

It is assumed herein that the secondary battery search unit 18 in the communication allowability range output device 1 searches a neighboring secondary battery 2 and establishes Wi-Fi communication with the secondary battery 2 in response to an operation of the manager after a disaster occurred.

Similarly, it is assumed that the secondary battery search unit 34 in the resident terminal 3 searches a neighboring secondary battery 2 and establishes Wi-Fi communication with the secondary battery 2 in response to an operation of the resident carrying the resident terminal 3. The resident expects the disaster-related information to be provided after the disaster occurred, and may operate the resident terminal 3 to establish communication between the resident terminal 3 and the neighboring secondary battery 2. The communication allowability range output device 1 can transmit the disaster-related information also to a resident terminal 3 establishing Wi-Fi communication with the secondary battery 2 later (or when a time has elapsed after the disaster occurred). That is, the resident terminal 3 may establish Wi-Fi communication with the secondary battery 2 when the disaster-related information is transmitted.

The information management unit 17 (see Fig. 3) in the communication allowability range output device 1 is input with the disaster-related information by the manager. Herein, the secondary batteries 2 make communication in the 920 MHz bandwidth. The amount of data communicable in the 920 MHz bandwidth is limited, and thus the manager may input the disaster-related information having as much data as communicable in the 920 MHz bandwidth. In order to restrict the amount of data, the manager has only to previously associate the contents of the disaster-related information with the numbers corresponding to the contents, and notify the correspondence to each resident. For example, the information that "You can evacuate to gym X and get meals in gym X" is associated with the number "1." In this way, the manager has only to associate each content of the previously-assumed disaster-related information with an individual number. Then, the manager may input a number as the disaster-related information. In the present example, the description will be made assuming the numbers are used as the disaster-related information.

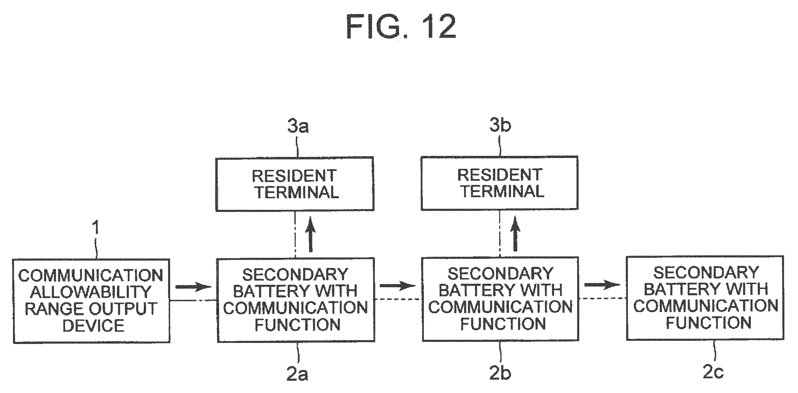

The information management unit 17 broadcasts the input disaster-related information. Fig. 12 is a schematic diagram illustrating an exemplary disaster-related information transmission route. In the example illustrated in Fig. 12, it is assumed that Wi-Fi communication is established between the communication allowability range output device 1 and the secondary battery 2a. Further, it is assumed that Wi-Fi communication is established between the resident terminal 3a and the secondary battery 2a and similarly Wi-Fi communication is established between the resident terminal 3b and the secondary battery 2b. The information management unit 17 transmits the disaster-related information to the secondary battery 2a with which communication is established (see Fig. 12).

When receiving the disaster-related information from the communication allowability range output device 1, the communication unit 24 in the secondary battery 2 (see Fig. 5) adds, to the disaster-related information, the information that a secondary battery in the ad-hoc network directly making Wi-Fi communication with the communication allowability range output device 1 as a transmission source of the disaster-related information is its node. In the example illustrated in Fig. 12, When receiving the disaster-related information from the communication allowability range output device 1, the communication unit 24 in the secondary battery 2a adds, to the disaster-related information, the information that a secondary battery in the ad-hoc network directly making Wi-Fi communication with the communication allowability range output device 1 is the secondary battery 2a. When the communication unit 24 receives the disaster-related information from other secondary battery, the information is already added thereto. In this case, the communication unit 24 does not add the information.

The communication unit 24 in the secondary battery 2a (see Fig. 5) transmits the disaster-related information received from the communication allowability range output device 1 to each communicably-neighboring secondary battery relative to the node. Each communicably-neighboring secondary battery relative to the node is specified by the neighboring node information created by the node. In the example illustrated in Fig. 12, the communication unit 24 in the secondary battery 2a transmits the disaster-related information to the secondary battery 2b. The communication unit 24 in the secondary battery 2a transmits the disaster-related information via Wi-Fi communication to the resident terminal 3a establishing Wi-Fi communication with the secondary battery 2a.

Subsequently, each secondary battery 2 in the ad-hoc network, which receives the disaster-related information, performs the same operation. That is, the communication unit 24 in each secondary battery 2 transmits the disaster-related information to each communicably-neighboring secondary battery 2 relative to its node, and transmits the disaster-related information also to the resident terminals 3 establishing Wi-Fi communication with its node. Consequently, the disaster-related information is sequentially transmitted to each secondary battery 2 forming the ad-hoc network, and the disaster-related information is transmitted also to the resident terminals 3 establishing communication with the secondary batteries 2. In the example illustrated in Fig. 12, the secondary battery 2b transmits the disaster-related information to the resident terminal 3b. If a resident terminal 3 establishing Wi-Fi communication with the secondary battery 2c is present, the secondary battery 2c transmits the disaster-related information to the resident terminal 3.

When the disaster-related information reception unit 31 in the resident terminal 3 (see Fig. 6) receives the disaster-related information from the secondary battery 2, the display control unit 35 displays the disaster-related information on the display unit 32. In the present example, a number is exchanged as the disaster-related information. The display control unit 35 may display the number on the display unit 32. The resident carrying the resident terminal 3 may grasp the contents of the disaster-related information by the number. For example, when "1" is displayed as the disaster-related information, the resident may grasp the content that "You can evacuate to gym X and get meals in gym X."

The safety information transmission unit 33 in the resident terminal 3 (see Fig. 6) transmits the safety information to the communication allowability range output device 1 as a transmission source of the disaster-related information. The safety information transmission unit 33 transmits the safety information in response to an operation of the resident carrying the resident terminal 3, for example.

The safety information transmission unit 33 adds, to the safety information, the information for designating a secondary battery 2 in the ad-hoc network directly making Wi-Fi communication with the communication allowability range output device 1 as a destination of the safety information based on the information added to the disaster-related information. For example, in the example illustrated in Fig. 12, the information that a secondary battery in the ad-hoc network directly making Wi-Fi communication with the communication allowability range output device 1 is the secondary battery 2a is added to the disaster-related information. The safety information transmission unit 33 in the resident terminal 3 adds, to the safety information, the information for designating a secondary battery in the ad-hoc network directly making Wi-Fi communication with the communication allowability range output device 1 as the secondary battery 2a.

The safety information transmission unit 33 then transmits the safety information to the secondary battery 2 establishing communication with the resident terminal 3. Further, each secondary battery 2 forming the ad-hoc network may transfer the safety information in the same operations as the operations of transferring a response signal (steps S21 to S26). Consequently, the information management unit 17 in the communication allowability range output device 1 receives the safety information transmitted from each resident terminal 3. The display control unit 15 displays, on the display unit 16, the information indicating the safe local residents and the unsafe local residents based on the safety information received by the information management unit 17.

According to the present exemplary embodiment, there has been described the case in which the information on a secondary battery in the ad-hoc network directly making Wi-Fi communication with the communication allowability range output device 1 is added to the disaster-related information and the safety information, but the present invention may be realized according to an exemplary embodiment in which the information on a secondary battery in the ad-hoc network directly making Wi-Fi communication with the communication allowability range output device 1 is not added to the disaster-related information and the safety information.

According to the present exemplary embodiment, the determination unit 14 in the communication allowability range output device 1 determines whether an individual secondary battery 2 is inoperative as a node in the ad-hoc network. The display control unit 15 then displays, on the display unit 16, the information indicating the areas in which communication is not available in the ad-hoc network based on the determination result. Therefore, the manager can grasp the areas in which communication is not available in the ad-hoc network. Consequently, the manager can install portable nodes operating as the nodes in the ad-hoc network in the areas, or can request the third party to install portable nodes in the areas, thereby recovering the ad-hoc network in the areas in which the secondary batteries 2 are inoperative. If a portable node is newly installed in an area in which the secondary battery 2 is inoperative, the manager can provide the disaster-related information also to the residents in the area.

The information management unit 17 in the communication allowability range output device 1 transmits the disaster-related information via broadcast communication. Therefore, the disaster-related information can be provided to each resident terminal 3 establishing communication with the secondary battery 2.

With the formed ad-hoc network, the disaster-related information can be transmitted from the communication allowability range output device 1 to the resident terminals 3 and information (such as safety information) can be transmitted from the resident terminals 3 to the communication allowability range output device 1.

The communication allowability range output device 1 is a portable terminal device, and thus the manager can carry the communication allowability range output device 1. Therefore, the manager carries the communication allowability range output device 1 in case of disaster, he/she can move the communication allowability range output device 1 to a safe place as needed and the communication allowability range output device 1 is less likely to fail to operate due to a disaster. Further, the secondary battery search unit 18 in the communication allowability range output device 1 establishes communication with the neighboring secondary batteries 2, and thus the communication allowability range output device 1 can use the ad-hoc network at a place to which the manager moves. That is, when the manager carrying the portable communication allowability range output device 1 is in an area where communication is not available in the ad-hoc network, he/she moves to an area in which communication is available in the ad-hoc network, thereby using the functions of the communication allowability range output device 1.

When an isolated area is present since the secondary batteries 2 operate but the secondary batteries 2 around the area are inoperative, the manager carrying the portable communication allowability range output device 1 moves to the area thereby to provide the disaster-related information to the residents in the isolated area.

The communication allowability range output device 1 is a portable terminal device so that the manager can provide the disaster-related information to the residents while moving and securing his/her safety.

According to the present exemplary embodiment, the secondary batteries with communication function 2 are used as the nodes in the ad-hoc network. Therefore, even if the electric power company cannot supply power due to a disaster, the ad-hoc network can be maintained for a long period of time thereafter.

A variant of the exemplary embodiment will be described below.

There has been described according to the exemplary embodiment the case in which the secondary batteries 2 make communication in the 920 MHz bandwidth so that the manager inputs the numbers as disaster-related information into the communication allowability range output device 1 and the information management unit 17 transmits the numbers as the disaster-related information. The manager may input specific disaster-related information (such as information that "You can evacuate to gym X and get meals at gym X") into the communication allowability range output device 1 and the information management unit 17 may transmit the specific disaster-related information to the secondary batteries 2 via Wi-Fi communication. In this case, each secondary battery 2 may store the correspondence between the specific disaster-related information and the numbers and may be provided with a conversion unit (not illustrated) for converting specific disaster-related information into a number. When the communication unit 24 in the secondary battery 2 receives specific disaster-related information from the communication allowability range output device 1, the conversion unit converts the disaster-related information into a number. The communication unit 24 may then transmit the disaster-related information converted into a number to the neighboring secondary batteries 2. The resident terminal 3 may include a resident terminal conversion unit (not illustrated) for converting the disaster-related information indicated in a number into the original description. That is, the resident terminal conversion unit may convert the disaster-related information indicated in a number into the original description and the display control unit 35 may display the disaster-related information converted into the original description on the display unit 32. Also in this form, the amount of communication among the secondary batteries 2 can be restricted.

The conversion unit for converting specific disaster-related information into a number may be provided in the communication allowability range output device 1. Further, the conversion unit in the secondary battery 2 may have a function of mutually converting specific disaster-related information and numbers. When the communication unit 24 in the secondary battery 2 transfers the disaster-related information to the resident terminal 3, the conversion unit converts the disaster-related information indicated a number into the original description and the communication unit 24 may transmit the disaster-related information converted into the original description to the resident terminal 3 via Wi-Fi communication.

According to the above exemplary embodiment, there has been described the case in which the determination unit 14 (see Fig. 3) transmits a vital monitoring signal to the individual secondary batteries 2 and determines whether an individual secondary battery 2 is inoperative depending on the presence of a response signal. The determination unit 14 may determine whether an individual secondary battery 2 is inoperative in other way.

For example, after the secondary battery search unit 18 establishes Wi-Fi communication with the secondary batteries 2 neighboring to the communication allowability range output device 1, the determination unit 14 may acquire the neighboring node information generated in each secondary battery 2 stored in the secondary battery 2. Specifically, the determination unit 14 requests each item of neighboring node information stored in the secondary battery 2 to the communication unit 24 in the secondary battery 2 establishing communication (see Fig. 5). The communication unit 24 transmits the neighboring node information generated in each secondary battery 2, which is stored in the storage unit 23, to the communication allowability range output device 1 in response to the request. The determination unit 14 receives the neighboring node information. The determination unit 14 sequentially selects a secondary battery 2 and determines whether a route to the selected secondary battery 2 is present with the secondary battery 2 (the secondary battery 2a in the example illustrated in Fig. 1) establishing communication with the communication allowability range output device 1 as the start point. When the route is not present, the determination unit 14 may determine that the selected secondary battery 2 is inoperative as a node in the ad-hoc network. On the other hand, when the route is present, the determination unit 14 may determine that the selected secondary battery 2 is operating as a node in the ad-hoc network.

There has been described according to the above exemplary embodiment the case in which an ad-hoc network is already formed during normal time. Each secondary battery 2 may form an ad-hoc network when the secondary battery 2 neighboring to the communication allowability range output device 1 receives an instruction of forming an ad-hoc network from the communication allowability range output device 1 after a disaster occurred.

The secondary battery 2 searches a wireless base station connected to a backbone line, and may establish communication (such as 3G communication) with the wireless base station when being able to search the wireless base station. In this case, the communication allowability range output device 1 can access the backbone line.

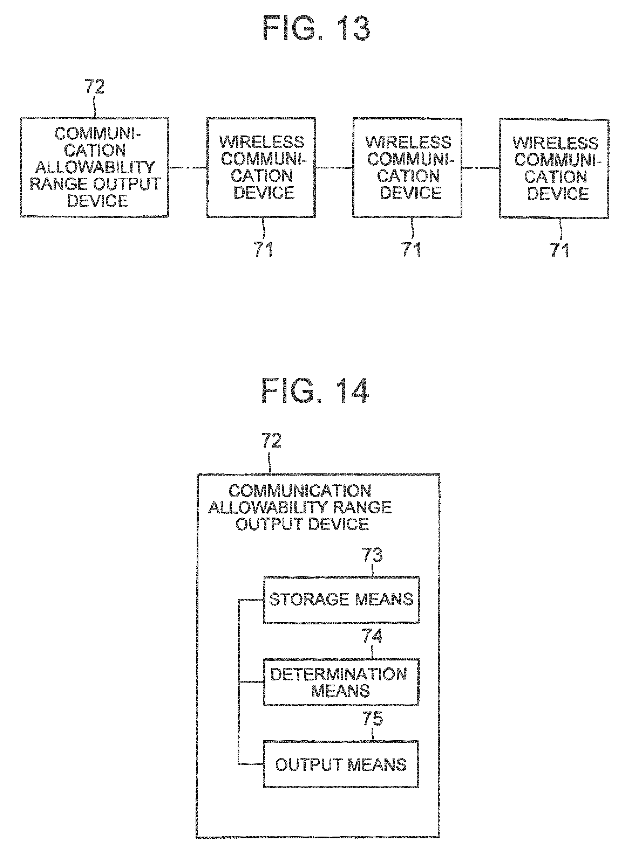

Main components in the communication allowability range output system according to the present invention will be described below. Fig. 13 is a block diagram illustrating the main components in the communication allowability range output system according to the present invention. The communication allowability range output system according to the present invention includes a plurality of wireless communication devices 71 (the secondary batteries 2, for example) and a communication allowability range output device 72 (the communication allowability range output device 1, for example). The communication allowability range output device 72 outputs information indicating a communication allowability range of a network formed by the wireless communication devices 71 based on position information of the wireless communication devices 71 and information on whether the wireless communication devices 71 are operating.

With the structure, the communication allowability range output system according to the present invention can specify a range in which communication is not available in a network.

Fig. 14 is a block diagram illustrating main components in the communication allowability range output device according to the present invention. The communication allowability range output device 72 includes storage means 73, determination means 74, and output means 75.

The storage means 73 (the storage unit 11, for example) stores position information of the wireless communication devices 71 therein.

The determination means 74 (the determination unit 14, for example) determines whether the wireless communication devices 71 are operating.

The output means 75 (the display control unit 15, for example) outputs information indicating a communication allowability range based on a result determined by the determination means 74.

The determination means 74 may transmit a specific signal (such as vital monitoring signal) to a wireless communication device 71, and may determine that the wireless communication device 71 is not operating when the wireless communication device 71 does not respond to the specific signal.

Alternatively, when the wireless communication devices 71 generate neighboring node information indicating other communicably-neighboring wireless communication device, transmit the neighboring node information to other communicably-neighboring wireless communication device, and receive neighboring node information generated by other wireless communication device, they may store the neighboring node information and transmit the neighboring node information to other communicably-neighboring wireless communication device, and the determination means 74 may acquire the neighboring node information stored in the wireless communication devices 71 from the wireless communication devices 71 neighboring to the communication allowability range output device 72 and may determine whether an individual wireless communication device 71 is operating based on the acquired neighboring node information.

Further, the output means 75 represents circles with the positions of inoperative wireless communication devices as the centers on a map thereby to discriminately output uncommunicable ranges and communicable ranges.

Alternatively, the output means 75 represents circles with the positions of operating wireless communication devices as the centers on a map thereby to discriminately output uncommunicable ranges and communicable ranges.

The wireless communication devices 71 may be secondary batteries with wireless communication function.

The communication allowability range output device 72 may be a portable terminal device.

The communication allowability range output device 72 may include information transmission means (the information management unit 17, for example) for transmitting information to terminals connected to a network formed by the wireless communication devices 71.

The present invention has been described above with reference to the exemplary embodiment, but the present invention is not limited to the above exemplary embodiment. The structure and details of the present invention may be variously changed within the scope of the present invention understandable by those skilled in the art.

The present application claims the priority based on Japanese Patent Application No. 2013-251103 filed on December 4, 2013, the disclosure of which is all incorporated herein by reference.

### Industrial Applicability

The present invention is suitably applicable to a communication allowability range output system for specifying a range in which communication is not available in an ad-hoc network.

### Reference Signs List

1: Communication allowability range output device
2, 2a, 2b, 2c: Secondary battery (secondary battery with communication function)
3, 3a, 3b: Resident terminal
11: Storage unit
14: Determination unit
15: Display control unit
16: Display unit
17: Information management unit
18: Secondary battery search unit
21: Secondary battery unit
22: Communication device
23: Storage unit
24: Communication unit
31: Disaster-related information reception unit
32: Display unit
33: Safety information transmission unit
34: Secondary battery search unit
35: Display control unit

## Claims

1. A communication allowability range output system comprising:
a plurality of wireless communication devices; and
a communication allowability range output device for outputting information indicating a communication allowability range of a network formed by the wireless communication devices based on position information of the wireless communication devices and information on whether the wireless communication devices are operating.

2. The communication allowability range output system according to claim 1,
wherein the communication allowability range output device includes:
storage means for storing position information of the wireless communication devices;
determination means for determining whether the wireless communication devices are operating; and
output means for outputting information indicating the communication allowability range based on a result determined by the determination means.

3. The communication allowability range output system according to claim 2,
wherein the determination means transmits a specific signal to the wireless communication device and determines that the wireless communication device is not operating when the wireless communication device does not respond to the specific signal.

4. The communication allowability range output system according to claim 2,
wherein the wireless communication devices generate neighboring node information indicating other communicably-neighboring wireless communication device, transmit the neighboring node information to the other communicably-neighboring wireless communication device, store neighboring node information when receiving the neighboring node information generated by other wireless communication device, and transmits the neighboring node information to the other communicably-neighboring wireless communication device, and
the determination means acquires the neighboring node information stored in a wireless communication device from the wireless communication device neighboring to the communication allowability range output device, and determines whether an individual wireless communication device is operating based on the acquired neighboring node information.

5. The communication allowability range output system according to any one of claim 2 to claim 4,
wherein the output means represents circles with the positions of inoperative wireless communication devices as the centers on a map thereby to discriminately output uncommunicable ranges and communicable ranges.

6. The communication allowability range output system according to any one of claim 2 to claim 4,
wherein the output means represents circles with the positions of operating wireless communication devices as the centers on a map thereby to discriminately output uncommunicable ranges and communicable ranges.

7. The communication allowability range output system according to any one of claim 1 to claim 6,
wherein the wireless communication devices are secondary batteries with wireless communication function.

8. The communication allowability range output system according to any one of claim 1 to claim 7,
wherein the communication allowability range output device is a portable terminal device.

9. The communication allowability range output system according to any one of claim 1 to claim 8,
wherein the communication allowability range output device includes information transmission means for transmitting information to terminals connected to a network formed by the wireless communication devices.

10. A communication allowability range output device comprising:
storage means for storing position information of a plurality of wireless communication devices;
determination means for determining whether the wireless communication devices are operating; and
output means for outputting information indicating a communication allowability range of a network formed by the wireless communication devices based on a result determined by the determination means.

11. A communication allowability range output method comprising:
storing position information of a plurality of wireless communication devices;
determining whether the wireless communication devices are operating; and
outputting information indicating a communication allowability range of a network formed by the wireless communication devices based on a determination result as to whether the wireless communication devices are operating.

12. A communication allowability range output program mounted on a computer comprising storage means for storing position information of a plurality of wireless communication devices, the program causing a computer to perform:
determination processing of determining whether the wireless communication devices are operating; and
information output processing of outputting information indicating a communication allowability range of a network formed by the wireless communication devices based on a result determined in the determination processing.
